# EUROPEAN PATENT APPLICATION

(11) **EP 2 453 145 A1**
(43) Date of publication of application: **16.05.2012**
(21) Application number: 10191151.9
(22) Date of filing: 15.11.2010
(51) Int. Cl.: F16D 13/70, F16D 13/72

(54) **Pressure plate for a dry clutch system**

(71) Applicant: Vicura AB, 461 38 Trollhättan (SE)
(72) Inventor: Sjöstrand, Mikael, 418 71 Göteborg (SE); Loubenets, Alexei, 461 51 Trollhättan (SE); Cyrén, Bengt, 472 32 Svanesund (SE)
(74) Representative: Haag, Malina Anna

(57) **Abstract**

The present invention relates to a pressure plate (100) for a dry clutch system and to a method for cooling a pressure plate (100) in a dry clutch system. The pressure plate (100) has an inner circumference (110) and an outer circumference (120). The pressure plate (100) comprises: a plurality of air flow guides (130) arranged in a direction from the inner circumference (100) to the outer circumference (120), wherein the air flow guides (130) are adapted to guide air from the inner circumference (110) towards the outer circumference (120) during spinning of the pressure plate (100), thereby cooling the pressure plate (100).

## Description

### Technical field

The present invention relates to a pressure plate for a dry clutch system and a method for cooling the pressure plate.

### Background art

Dry clutch systems (in, e.g., manual transmissions or dual clutch transmission systems) for automotive applications are very sensitive to heat impacts. A heat impact appears every time the clutch is slipping, which happens when the vehicle starts from zero or when torque interrupt is needed for changing gears. Organic clutch lining materials are sensitive to temperatures higher than approximately 220°C, which for a modern vehicle is reached quite quickly. Furthermore, in order to decrease the fuel consumption of the vehicle, often a numerically lower ratio is provided in the transmission which further increases the energy load on the clutch and, thus, increases the risk of damaging the clutch due to higher temperature.

One way to decrease the effect of a heat impact on the clutch is by increasing the mass and size of the clutch pressure plate. Unfortunately, the packing space is very limited in most vehicles today and that is therefore sometimes not a possible solution. Furthermore, this increases the weight of the vehicle and also the amount of material needed.

### Summary of the invention

In view of the above, an objective of the invention is to solve or at least reduce one or several of the drawbacks discussed above. Generally, the above objective is achieved by the attached independent patent claims.

According to a first aspect, the present invention is realized by a pressure plate for a dry clutch system having an inner circumference and an outer circumference. The pressure plate comprises: a plurality of air flow guides arranged in a direction from the inner circumference to the outer circumference, wherein the air flow guides are adapted to guide air from the inner circumference towards the outer circumference during spinning of the pressure plate, thereby cooling the pressure plate. The air flow guides increase the flow of air in the vicinity of the pressure plate during spinning of the pressure plate which, in turn, increases the convection of the heat from the pressure plate to the surrounding air. This is advantageous in that it results in a lower temperature in the clutch which increases the lifetime of the clutch.

The air flow guides may be chosen from the group consisting of through holes, blind holes, surface recesses, and surface protrusions.

The air flow guides may extend in a radial direction of the pressure plate.

The air flow guides may be arranged at an angle in relation to a radius of the pressure plate. This is advantageous in that during spinning of the pressure plate, air even more easily flows into inlets of the air flow guides.

A shape of an inlet of at least one air flow guide may be chosen from the group of circular, oval, quadratic or rectangular. Circular and oval shape is advantageous in that it increases the amount of air that is guided into the inlet during spinning of the pressure plate. Quadratic and rectangular shape is advantageous in that it is easy to create.

A width of the inlet of the at least one air flow guide may be larger than a width of an outlet of the at least one air flow guide. This accelerates the air flow. Furthermore, the volume of the pressure plate is decreased less than it would if the whole air flow guide were to be of the same width.

According to a second aspect, the present invention is realized by a method for cooling a pressure plate in a dry clutch system, the pressure plate having an inner circumference and an outer circumference. The method comprises: arranging a plurality of air flow guides in a direction from the inner circumference to the outer circumference, wherein the air flow guides are adapted to guide air from the inner circumference towards the outer circumference during spinning of the pressure plate, thereby cooling the pressure plate.

The advantages of the first aspect are equally applicable to the second aspect. Furthermore, the second aspect can be embodied in the corresponding embodiments of the first aspect.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief Description of the Drawings

Other features and advantages of the present invention will become apparent from the following detailed description of a presently preferred embodiment, with reference to the accompanying drawings, in which
Fig. 1 is a perspective view of an embodiment of the inventive pressure plate for a dry clutch system.
Fig. 2 is a perspective view of an embodiment of the inventive pressure plate for a dry clutch system.
Fig. 3a is a perspective view of an embodiment of the inventive pressure plate for a dry clutch system.
Fig. 3b is a side view of the embodiment of the inventive pressure plate for a dry clutch system of Fig 3a.

### Detailed description of preferred embodiments of the invention

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

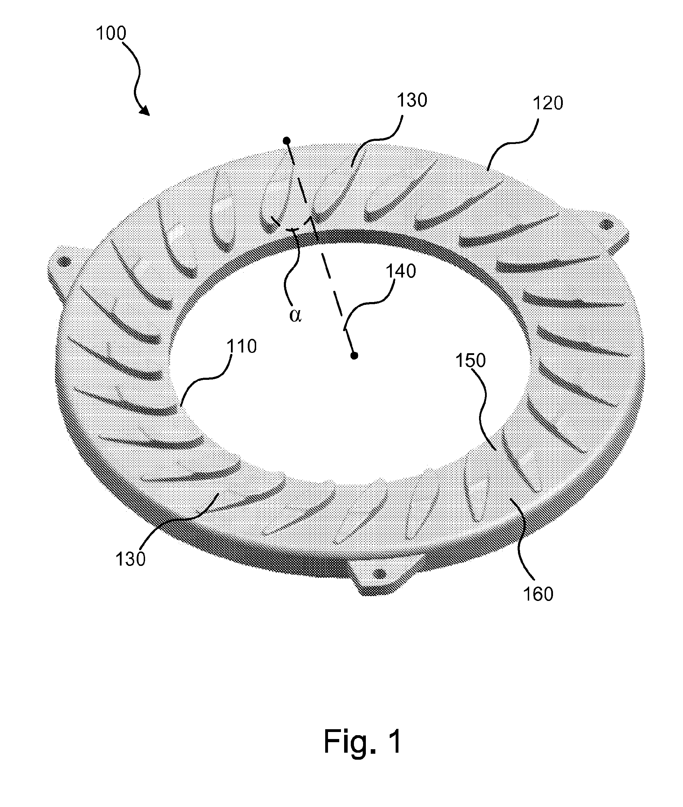

Fig. 1 discloses an embodiment of the inventive pressure plate for a dry clutch system. The pressure plate 100 of Fig. 1 has an inner circumference 110 and an outer circumference 120. The pressure plate 100 comprises a plurality of air flow guides 130 arranged in a direction from the inner circumference 110 to the outer circumference 120. The air flow guides 130 are adapted to guide air from the inner circumference 110 towards the outer circumference 120 during spinning of the pressure plate 100, thereby cooling the pressure plate 100.

The air flow guides 130 increase the flow of air in the vicinity of the pressure plate 100 during spinning of the pressure plate 100 which, in turn, increases the convection of the heat from the pressure plate 100 to the surrounding air. This is advantageous in that it results in a lower temperature in the clutch which increases the lifetime of the clutch.

In Fig. 1, the air flow guides 130 are embodied as surface protrusions. It is to be noted that the air flow guides 130 may be chosen from the group consisting of through holes, blind holes, surface recesses, and surface protrusions. More particularly, in Fig 1, the air flow guides 130 are embodied as air foils. The air foils have a thickness which extends in a direction of the thickness of the pressure plate 100. The thickness of the air flow guides 130 decreases in a radial direction from the inner circumference 110 towards the outer circumference 120 of the pressure plate 100. The air foils have a width which decreases in a radial direction from the inner circumference 110 towards the outer circumference 120 of the pressure plate 100.

The airflow guides 130 extend in a radial direction of the pressure plate (100).

In Fig. 1, the air flow guides 130 are arranged at an angle a in relation to a radius 140 of the pressure plate 100. This is advantageous in that during spinning of the pressure plate 100, air even more easily flows into inlets 150 of the air flow guides 130. The air flows more easily into inlets 150 provided that the pressure plate 100 spins in a direction so that air even more easily flows into inlets 150 of the air flow guides 130 which in Fig. 1 is anticlockwise.

A width of an inlet 150 of the at least one air flow guide 130 is larger than a width of an outlet 160 of the at least one airflow guide 130. This accelerates the air flow. Furthermore, the volume of the pressure plate is decreased less than it would if the whole air flow guide 130 were to be of the same width.

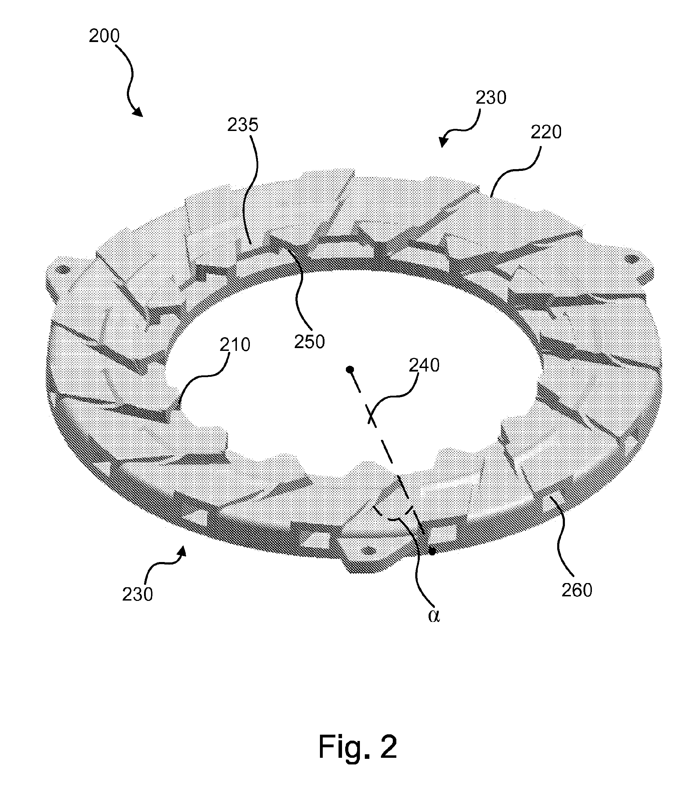

Fig. 2 discloses an embodiment of the inventive pressure plate 200 for a dry clutch system. The pressure plate 200 of Fig. 2 is in principle equivalent to the pressure plate 100 of Fig. 1. However the following differences exist:

In Fig. 2, the air flow guides 230 are embodied as through holes.

A shape of an inlet 250 of at least one air flow guide 230 is chosen from the group of circular, oval, quadratic or rectangular. Circular and oval shape is advantageous in that it increases the amount of air that flows into the inlet 250 during spinning of the pressure plate 200. Quadratic and rectangular shape is advantageous in that it is easy to create. In Fig. 2, the inlets 250 are of rectangular shape.

The air flow guides 230 may be arranged in at least one of a center of a thickness of the pressure plate 200, in a top surface of the pressure plate 200, in a bottom surface of the pressure plate 200 or somewhere there between.

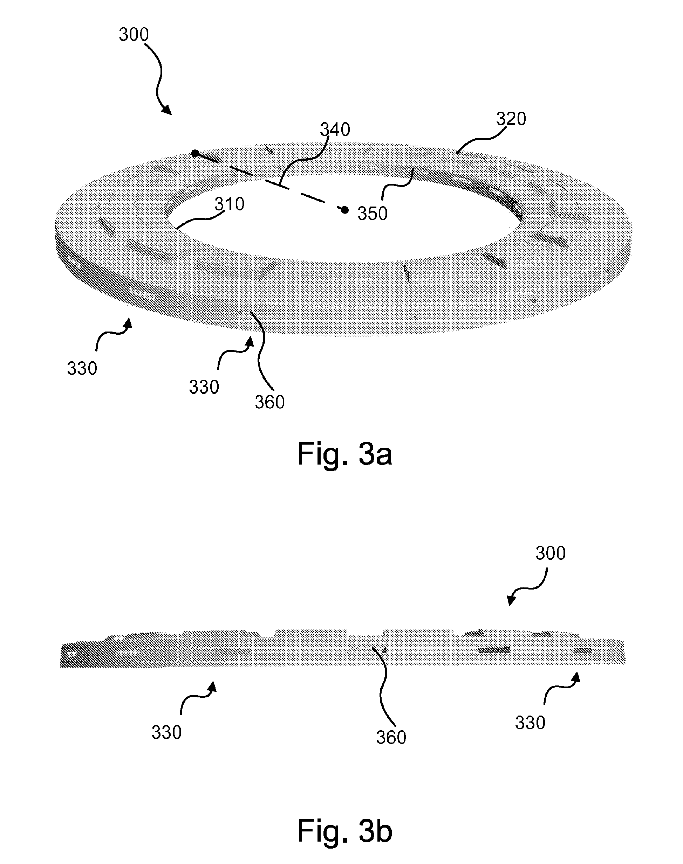

Fig. 3a discloses an embodiment of the inventive pressure plate 300 for a dry clutch system. Fig. 3b is a side view of the pressure plate 300 in Fig. 3a. The pressure plate 300 of Figs. 3a and 3b is in principle equivalent to the pressure plate 200 of Fig. 2. However the following differences exist:

The width of an inlet 350 of the at least one air flow guide 330 is not larger than a width of an outlet 360 of the at least one airflow guide 330.

The air flow guides 330 are not arranged at an angle α in relation to a radius 340 of the pressure plate 300.

As described above, Fig. 2 discloses air flow guides 230 embodied as through holes. Furthermore, Fig. 2 also discloses air flow guides embodied as surface recesses 235.

The skilled person realizes that any combination of the described pressure plates 100, 200, 300 and any embodiment of the described air flow guides 130, 230, 330 is possible. E.g., different sorts of air flow guides can be combined in one pressure plate, i.e. one pressure plate may have air flow guides embodied as through holes, blind holes, surface recesses, and surface protrusions, or any combination of one or several of these.

Furthermore, at least one of the air flow guides may be arranged in a radial direction of the pressure plate and at least one of the air flow guides may be arranged at an angle α in relation to a radius of the pressure plate.

Additionally, an inlet of at least one air flow guide may be chosen from the group of circular, oval, quadratic or rectangular. This implies that one pressure plate may have air flow guides having inlets of different shapes.

Moreover, some of the widths of some of the inlets may be larger than the widths of the outlets of the air flow guides.

In the following, the inventive method for cooling a pressure plate 100, 200, 300, in a dry clutch system will be described with reference to Figs. 1-3.

The pressure plate 100, 200, 300, has an inner circumference 110, 210, 310 and an outer circumference 120, 220, 320. The method comprises: arranging a plurality of air flow guides 130, 230, 330 in a direction from the inner circumference 110, 210, 310 to the outer circumference 120, 220, 320, wherein the air flow guides 130, 230, 330 are adapted to guide air from the inner circumference 110, 210, 310 towards the outer circumference 120, 220, 320 during spinning of the pressure plate 100, 200, 300, thereby cooling the pressure plate 100, 200, 300.

It is to be noted that the inventive method can be used for cooling any type of pressure plate embodied with any combination of features described herein.

## Claims

1. Pressure plate (100) for a dry clutch system having an inner circumference (110) and an outer circumference (120) comprising:
a plurality of air flow guides (130) arranged in a direction from the inner circumference (110) to the outer circumference (120), wherein the air flow guides (130) are adapted to guide air from the inner circumference (110) towards the outer circumference (120) during spinning of the pressure plate (100), thereby cooling the pressure plate (100).

2. Pressure plate (100) according to claim 1, wherein the air flow guides (130) are chosen from the group consisting of through holes, blind holes, surface recesses, and surface protrusions.

3. Pressure plate (100) according to any one of claims 1-2, wherein the airflow guides (130) extend in a radial direction of the pressure plate (100).

4. Pressure plate (100) according to any one of claims 1-2, wherein the air flow guides are arranged at an angle (α) in relation to a radius (140) of the pressure plate (100).

5. Pressure plate (100) according to any one of claims 1-4, wherein an inlet (150) of at least one air flow guide (130) has a shape which is chosen from the group of circular, oval, quadratic or rectangular.

6. Pressure plate (100) according to claim 5, wherein a width of the inlet (150) of the at least one air flow guide (130) is larger than a width of an outlet (160) of the at least one airflow guide.

7. Method for cooling a pressure plate in a dry clutch system, the pressure plate having an inner circumference and an outer circumference the method comprising:
arranging a plurality of air flow guides in a direction from the inner circumference to the outer circumference, wherein the air flow guides are adapted to guide air from the inner circumference towards the outer circumference during spinning of the pressure plate, thereby cooling the pressure plate.

8. Method according to claim 7, wherein the air flow guides are chosen from the group consisting of through holes, blind holes, surface recesses, surface protrusions.

9. Method according to any one of claims 7-8, wherein the airflow guides extend in a radial direction of the pressure plate.

10. Method according to any one of claims 7-8, wherein the air flow guides are arranged at an angle in relation to a radius of the pressure plate.

11. Method according to any one of claims 7-10, wherein an inlet of at least one air flow guide has a shape which is chosen from the group of circular, oval, quadratic or rectangular.

12. Method according to claim 11, wherein a width of the inlet of the at least one air flow guide is larger than a width of an outlet of the at least one airflow guide.
